# EUROPÄISCHE PATENTSCHRIFT

(11) **EP 0 653 467 B1**
(45) Veröffentlichungstag und Bekanntmachung des Hinweises auf die Patenterteilung: **10.03.1999**
(21) Anmeldenummer: 94117891.5
(22) Anmeldetag: 12.11.1994
(51) Int. Cl.: C09D 5/44, C09D 163/00

(54) **Wässriger kathodisch abscheidbarer Elektrotauchlack und Beschichtungsverfahren unter dessen Verwendung**
Aqueous cathodic electrodeposition paint and method of coating using it
Peinture aqueuse d'électrodéposition cathodique et procédé de revêtement en faisant usage

(30) Priorität: 16.11.1993 DE 4339084
(43) Veröffentlichungstag der Anmeldung: 17.05.1995
(73) Patentinhaber: Herberts Gesellschaft mit beschränkter Haftung, 42285 Wuppertal (DE)
(72) Erfinder: Klein, Klausjörg, D-42289 Wuppertal (DE); Kerlin, Klaus-Günther, D-42781 Haan (DE)
(74) Vertreter: Türk, Gille, Hrabal

(56) Entgegenhaltungen:
- WO-A-87/02717
- DE-A- 2 227 771
- GB-A- 2 129 807
- GB-A- 2 242 430

## Beschreibung

Die Erfindung betrifft einen fein verteilte Kohle und/oder Kohlenstoff enthaltenden kathodischen Elektrotauchlack (KTL) mit niedrigem spezifischen Gewicht der daraus auf elektrisch leitenden Substraten abgeschiedenen Lackfilme und die Verwendung derartiger Tauchlacke zur Herstellung elektrisch isolierender Überzüge durch elektrophoretische Beschichtung. Die Erfindung betrifft außerdem ein Verfahren zur kataphoretischen Beschichtung von Substraten mit elektrisch leitender Oberfläche und die nach diesem Verfahren erhaltenen Substrate mit elektrisch isolierenden Überzügen.

Elektrotauchlacke enthalten üblicherweise erhebliche Mengen anorganischer Pigmente oder Füllstoffe. Diese besitzen ein hohes spezifisches Gewicht. Ruß wird im allgemeinen nur in geringen Mengen zur Farbgebung zugesetzt. Bei Verwendung erhöhter Rußanteile werden nach dem Einbrennen leitfähige Überzüge erhalten.

Die JP-54 116 633-A beschreibt kathodische Tauchlacke (KTL), die bezogen auf den Harzfestkörper 0,1 bis 5 Gew.-% Graphit mit einer Teilchengröße unter 60 µm enthalten. Die Lacke weisen Stabilitätsprobleme auf. Nach dem Einbrennen werden leitfähige Überzüge erhalten.

Die GB-A-2 129 807 beschreibt kathodisch abscheidbare Tauchlacke, die fein verteilten Kohlenstoff, z.B. Graphit oder Ruß mit einem Teilchendurchmesser von 15 bis 85 µm in einem Mengenanteil von 8 bis 50 Gew.-%, bezogen auf Festkörper, enthalten. Daraus abgeschiedene Lackschichten weisen nach dem Einbrennen eine hohe elektrische Leitfähigkeit auf, so daß eine zweite Lackschicht elektrophoretisch auf der ersten Lackschicht abgeschieden werden kann.

Die DE-A-3 538 792 beschreibt kathodisch abscheidbare Tauchlacke, die bezogen auf Festkörper 1,5 bis 5,1 Gew.-% elekrisch leitfähigen Ruß mit einer Teilchengröße von 25 bis 35 nm enthalten. Nach dem Einbrennen der aus diesem KTL abgeschiedenen elektrisch leitfähigen Lackschicht wird diese durch kataphoretische Abscheidung mit einer zweiten KTL-Schicht versehen.

Auch die in GB-A-2 128 807 und in DE-A-3 538 792 beschriebenen KTL weisen Stabilitätsprobleme auf. Die elektrisch leitfähigen Lackschichten bieten keine elektrische Isolierung. Der Korrosionsschutz dieser so beschichteten Substrate ist schlecht.

Die Ergiebigkeit, der Umgriff und die damit in Zusammenhang stehende Korrosionslinie der bekannten Ruß oder Graphit enthaltenden kathodischen Elektrotauchlacke ist verbesserungsbedürftig. Zudem werden bei hohem Gehalt an Ruß oder Graphit unbefriedigende Oberflächenstrukturen erzielt.

Die Erfindung betrifft daher auch die Verwendung von Kohleteilchen und/oder von Ruß und Graphit. unterschiedlichen Kohlenstoffteilchen mit bestimmter Teilchengröße und spezifischem Gewicht zur Verbesserung des Umgriffs wäßriger kataphoretisch abscheidbarer Tauchlacke und zur Erhöhung der Korrosionslinie aufgrund des besseren Umgriffs.

Aufgabe der Erfindung ist die Bereitstellung eines KTL mit hoher Ergiebigkeit und guter Stabilität, der zu gutem Korrosionsschutz und verbessertem Umgriff führt. Aus diesem Elektrotauchlack auf elektrisch leitfähigen Substraten abgeschiedene Lackschichten sollen vor und nach dem Vernetzen elektrisch isolierend wirken, d.h. einen hohen Filmwiderstand besitzen. Die elektrophoretische Abscheidung einer weiteren Elektrotauchlackschicht auf dem KTL-beschichteten Substrat soll nicht mehr möglich sein. Die Oberflächen der erhaltenen Überzüge sollen glatt und homogen sein.

Die Aufgabe wird gelöst durch Bereitstellung eines wäßrigen kathodisch abscheidbaren Tauchlacks, der neben üblichen filmbildenden, selbst- oder fremdvernetzenden kathodische Gruppen tragenden Bindemitteln sowie gegebenenfalls Vernetzern, Pigmenten, Füllstoffen und/oder lacküblichen Additiven 5 bis 40 Gew.-%, bezogen auf den Feststoffgehalt, an Kohle und/oder von Ruß und Graphit unterschiedlichen Kohlenstoffteilchen enthält, wobei die Kohle- und die Kohlenstoffteilchen eine mittlere Teilchengröße von 300 bis 10000 nm und ein spezifisches Gewicht von unter 1,7 g/cm³ aufweisen.

Bei den erfindungsgemäßen Elektrotauchlacken handelt es sich um wäßrige Überzugsmittel mit einem Festkörper von beispielsweise 10 - 25 Gew.-%. Dieser besteht aus üblichen Bindemitteln, die kationische oder in kationische Gruppen überführbare Substituenten sowie zur chemischen Vernetzung fähige Gruppen tragen, sowie gegebenenfalls Pigmenten und weiteren lacküblichen Additiven neben dem erfindungswesentlichen Anteil an fein verteiltem Kohlenstoff. Die Bindemittel enthalten kationische Gruppen oder basische Gruppen, die in kationische Gruppen überführt werden können. Besonders bevorzugt sind stickstoffhaltige basische oder kationische Gruppen, wie Aminogruppen und Ammoniumgruppen. Diese Gruppen können quarternisiert vorliegen oder sie werden mit einem üblichen Neutralisationsmittel, z.B. einer organischen Monocarbonsäure, wie z.B. Ameisensäure, Essigsäure, wie dem Fachmann geläufig, in kationische Gruppen überführt. Vorhandene Aminogruppen können primär, sekundär und/oder tertiär sein. Sie können ganz oder teilweise neutralisiert vorliegen.

Beispiele für verwendbare basische Harze sind beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (Mw) der Basisharze liegt bevorzugt bei 300 bis 10000. Beispiele für solche Basisharze sind Amino(meth)acrylatharze Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind blockierte Polyisocyanate, Vernetzer mit endständigen Doppelbindungen, Polyepoxidverbindungen oder Vernetzer, die umesterungsfähige Gruppen enthalten. Besonders bevorzugt sind blockierte Polyisocyanate.

Beispiele für in kathodischen Tauchlack (KTL)-Bädern eingesetzte Basisharze und Vernetzer, die erfindungsgemäß verwendet werden können, sind in der EP-A-082 291, EP-A-234 395, EP-A-209 857, EP-A-227 975, EP-A-178 531, EP-A-333 327, EP-A-310 971, EP-A-456 270, US-A-3 922 253, EP-A-261 385, EP-A-245 786, DE-A-33 24 211, EP-A-476 514 beschrieben. Diese Harze können allein oder im Gemisch eingesetzt werden.

Der im erfindungsgemäßen KTL eingesetzte Kohlenstoff besitzt eine mittlere Teilchengröße zwischen 300 und 10000 nm, bevorzugt zwischen 1000 und 7000 nm. Unter mittlerer Teilchengröße ist die beim Dispergieren nicht unterschreitbare Primärkorngröße zu verstehen. Der im erfindungsgemäßen KTL eingesetzte Kohlenstoff weist ein spezifisches Gewicht unterhalb von 1,7 g/cm³, bevorzugt unterhalb von 1,5 g/cm³, besonders bevorzugt unterhalb von 1,3 g/cm³ auf. Das spezifische Gewicht kann beispielsweise nach DIN ISO 787, Teil 10 ermittelt werden. Es handelt sich um Kohlenstoff, der aus organischem, bevorzugt biogenem Material unter Einwirkung von Hitze und gegebenenfalls Druck unter Luftabschluß gebildet werden kann. Beispiele sind Holzkohle, Tierkohle, Aktivkohle. Ein bevorzugter Kohlenstoff ist solcher fossilen Ursprungs, wie er z.B. im Bergwerk beispielsweise als Steinkohle gewonnen werden kann. Ein Beispiel für einen im erfindungsgemäßen KTL besonders bevorzugt einsetzbaren Kohlenstoff wird von der Firma Slab Fork Coal Company unter dem Handelsnamen Austin Black 325 vertrieben. Es handelt sich um ein Material mit einem Gehalt von 77 Gew.-% elementarem Kohlenstoff, 17 Gew.-% bei 600°C flüchtigen Bestandteilen, 5 Gew.-% Aschebestandteilen und einem Feuchtigkeitsgehalt von 1 Gew.-%. Es sind aber auch andere Kohletypen einsetzbar, solange die Bedingung des niedrigen spezifischen Gewichts und der Teilchengröße erfüllt werden. Die Kohle soll so beschaffen sein, daß, falls sie an sich wasserlösliche ionische Verbindungen enthält, diese aus ihr unter den Bedingungen der Herstellung und des Betriebs des KTL-Bades nicht oder nur in einem die Eigenschaften des KTL-Bades nicht schädigenden Maß in das KTL-Bad übergehen. Bei dem im erfindungsgemäßen KTL einsetzbaren, fein verteilten Kohlenstoff handelt es sich nicht um Graphit oder Ruß, welcher z.B. durch unvollständige Verbrennung oder katalytische Zersetzung von flüssigen oder gasförmigen Kohlenwasserstoffen hergestellt werden kann. Es handelt sich insbesondere nicht um Pigmente, die als Leitfähigkeitspigmente beschrieben sind und bei deren Verwendung sich nach dem Einbrennen elektrisch leitfähige Überzüge ergeben. Im Rahmen der vorliegenden Erfindung sollen jedoch Überzüge erhalten werden, die trotz eines hohen Anteils an Kohlenstoff keine elektrische Leitfähigkeit aufweisen und bei üblichen Spannungen unter 500 V isolierend wirken.

Die vorstehend erläuterte Kohle und Kohlenstoff, nachstehend vereinfachend als Kohle bezeichnet, werden in Mengenanteilen von 5 bis 40 Gew.-%, bevorzugt zwischen 10 und 30 Gew.-%, besonders bevorzugt zwischen 15 und 25 Gew.-%, jeweils bezogen auf den Feststoffgehalt des KTL, eingesetzt.

Zusätzlich zu den Basisharzen und gegebenenfalls vorhandenem Vernetzer und dem erfindungswesentlichen Gehalt-an Kohle kann das KTL-Überzugsmittel weitere Pigmente, Füllstoffe und/oder lackübliche Additive enthalten. Als Pigmente kommen die üblichen anorganischen und/oder organischen Pigmente in Frage. Beispiele sind Ruß, Titandioxid, Eisenoxid, Kaolin, Talkum oder Siliciumdioxid. Werden die Überzugsmittel als Korrosionsschutzgrundierung eingesetzt, so ist es möglich, daß sie Korrosionsschutzpigmente enthalten. Beispiele dafür sind Zinkphosphat oder organische Korrosionsinhibitoren. Die Art und Menge der Pigmente richtet sich nach dem Verwendungszweck der Überzugsmittel.

Als Additive sind beispielsweise die üblichen Additive für KTL-Überzugsmittel möglich. Beispiele dafür sind Netzmittel, Neutralisationsmittel, Verlaufsmittel, Katalysatoren, Antischaummittel sowie übliche Lösemittel. Über die Art und Menge der Katalysatoren kann das Vernetzungsverhalten beeinflußt werden. Beispiele für gebräuchliche Katalysatoren, die einzeln oder im Gemisch eingesetzt werden können, sind geeignete Verbindungen von Ti, V, W, Mn, Fe, Co, Ni, Ge, Zr, Sn, Sb, Hf, Ta, Pb, Bi, der Lanthaniden und der Actiniden. Es kann vorteilhaft sein, das ETL-Überzugsmittel frei von Katalysatoren zu formulieren.

Sehr gut geeignete KTL-Bäder sind solche, die einen Zusatz von Wismut als Wismutate und/oder in Form organischer Wismutkomplexe und/oder als Wismutsalze organischer Carbonsäuren enthalten. Diese sind in der noch nicht veröffentlichten deutsche Patentanmeldung P 43 30 002.2 der gleichen Anmelderin beschrieben. Bei den Salzen kann es sich um solche einer organischen Mono- oder Polycarbonsäure handeln. Als Beispiel für komplexbildende Liganden sei z.B. Acetylaceton genannt. Es sind jedoch auch andere organische Komplexbildner mit einer oder mehreren komplexbildenden Gruppen möglich. Beispiele für geeignete organische Carbonsäuren, von denen sich erfindungsgemäß einsetzbare Wismutsalze ableiten, sind aromatische, araliphatische und aliphatische Mono- oder Dicarbonsäuren. Bevorzugt sind die Wismutsalze von organischen Monocarbonsäuren, insbesondere mit mehr als zwei C-Atomen, speziell Hydroxycarbonsäuren. Beispiele sind Wismutsalicylat, Wismut-4-hydroxybenzoat, Wismutlactat, Wismutdimethylolpropionat. Insbesondere sind die Wismutsalze von aliphatischen Hydroxycarbonsäuren geeignet.

Der Mengenanteil der Wismutverbindung im KTL-Bad kann beispielsweise 0,1 bis 5 Gew.-%, bevorzugt 0,5 bis 3,0 Gew.-% betragen, berechnet als Wismut und bezogen auf den Bindemittelfestkörper des KTL-Bades. Dabei ist darauf zu achten, daß die Menge der gegebenenfalls eingebrachten Carboxylationen nicht die Eigenschaften des KTL negativ beeinflußt. Die Wismutverbindung kann im erfindungsgemäßen KTL in der wäßrigen oder in der dispersen Phase gelöst, feinverteilt, z.B. in kolloidaler Form, oder als vermahlenes Pulver vorliegen. Bevorzugt soll sie eine zumindest anteilige Wasserlöslichkeit besitzen.

Bevorzugt werden die Wismutverbindungen jedoch unter den vorstehend beschriebenen Wismutverbindungen so ausgewählt, daß bei den in den KTL-Bädern herrschenden pH-Werten nur eine geringe Membrangängigkeit bei den bekannten Ultrafiltrationsverfahren vorliegt, d.h. das Ultrafiltrat sollte im wesentlichen frei von Wismutverbindungen sein.

Die Einarbeitung der vorstehend beschriebenen Wismutverbindungen in den KTL kann auf verschiedene Weise erfolgen. Beispielsweise kann die Wismutverbindung vor Zugabe wesentlicher Mengen von Wasser als Verdünnungsmittel der neutralisierten Bindemittellösung gegebenenfalls bei erhöhter Temperatur zugegeben und anschließend unter Rühren homogenisiert werden. Bei Verwendung von Hydroxycarbonsäuren, wie z.B. Milchsäure oder Dimethylolpropionsäure, als Neutralisationsmittel für die Bindemittel, kann auch mit den entsprechenden Mengen an Wismutoxid oder -hydroxid garbeitet werden, wobei das entsprechende Wismutsalz in situ gebildet wird.

Weiterhin ist die Einarbeitung der Wismutverbindung in den KTL z.B. auch als Bestandteil von üblichen Pigmentpasten möglich. Ebenso können die Wismutverbindungen, wenn sie wasserlöslich sind bzw. in einem Lösungsvermittler gelöst vorliegen, der KTL-Bindemitteldispersion oder dem KTL nachträglich zugesetzt werden. Es ist jedoch darauf zu achten, daß eine gleichmäßige Verteilung im KTL-Bad vorliegt.

Verfahren zur Herstellung von KTL-Bädern sind bekannt. Bei dem erfindungsgemäßen Einsatz von Kohle wird diese bevorzugt zu einer Pigmentpaste dispergiert, z.B. unter Verwendung von bekannten Pastenharzen. Ebenso können die gegebenenfalls zusätzlichen Pigmente und Füllstoffe zu Pigmentpasten dispergiert werden. Für die Dispergierung geeignete Harze sind dem Fachmann geläufig. Beispiele für in KTL-Bädern verwendbare Pastenharze sind in der EP-A-0 183 025 und in der EP-A-0 469 497 beschrieben.

Das Pigment/Bindemittel-Gewichtsverhältnis des erfindungsgemäßen Elektrotauchlacks beträgt beispielsweise zwischen 0,05 : 1 und 0,8 : 1, bevorzugt zwischen 0,05 : 1 und 0,4 : 1, wobei in den Pigmentanteil der Gehalt an Kohle- bzw. Kohlenstoffteilchen und Füllstoffen einbezogen ist. Bevorzugt enthält der erfindungsgemäße Elektrotauchlack neben der Kohle nur geringe Anteile oder keine weiteren Pigmente oder Füllstoffe. Weiterhin bevorzugt sind solche KTL-Bäder, die keine gesundheitlich bedenklichen Schwermetallverbindungen, wie z.B. Bleiverbindungen enthalten. Beispiele dafür sind beschrieben in EP-A-304 754, EP-A-341 596, EP-A-347 785, EP-A-414 199 und DE-A-4 222 596.

Die erfindungsgemäßen Elektrotauchlacke sind stabil. Es besteht keine Neigung zur Bildung von Flokkulaten oder zur Pigmentsedimentation.

Aus den erfindungsgemäßen Elektrotauchlackbädern können unter üblichen Bedingungen verschiedene Substrate beschichtet werden. Diese weisen nach dem Einbrennen eine einwandfreie Oberfläche auf. Die mechanischen sowie die Korrosionsschutzeigenschaften der unter Verwendung der erfindungsgemäßen Elektrotauchlackbäder hergestellten Lackschichten ist gut. Überraschend ist es, daß die aus den erfindungsgemäßen Elektrotauchlacken hergestellten eingebrannten Lackschichten bei üblichen Schichtdicken von z.B. > 10 µm elektrisch isolierend wirken, obwohl ein hoher Kohlegehalt vorliegt. Unter elektrisch isolierender Wirkung ist hier zu verstehen, daß der elektrische Filmwiderstand so hoch ist, daß er bis zu einer Spannung von 500 V isolierend wirkt. Auf die eingebrannte KTL-Schicht aus dem erfindungsgemäßen Überzugsmittel kann keine weitere Lackschicht elektrophoretisch aufgebracht werden.

Die erfindungsgemäßen Elektrotauchlacke besitzen hohe Volumenverhältnisse von Kohle- bzw. Kohlenstoffteilchen, Pigment und Füllstoff zu Bindemittel. Sie sind sedimentationsstabil.

Gegenüber bekannten, übliche Ruße oder Graphit enthaltenden Elektrotauchlacken zeichnen sich die erfindungsgemäßen Elektrotauchlacke durch ein niedrigeres spezifisches Gewicht ihrer eingebrannten Lackfilme aus. Dies führt zu einer Ressourcenschonung, da eine erhöhte Ergiebigkeit vorliegt. Das heißt, bei vorgegebener Dicke der Lackschicht kann mit einer Masseeinheit des erfindungsgemäßen Elektrotauchlacks eine größere Fläche beschichtet werden als mit einer Masseeinheit eines vergleichbaren Elektrotauchlacks des Standes der Technik. Die erfindungsgemäßen KTL-Überzugsmittel zeigen überraschenderweise einen im Vergleich zu Ruß oder Graphit enthaltenden KTL-Überzugsmitteln deutlich erhöhten Umgriff.

Die erfindungsgemäßen Elektrotauchlacke eignen sich insbesondere auf dem Kraftfahrzeugsektor, beispielsweise zur Grundierung von Kraftfahrzeugkarosserien oder Kraftfahrzeugkarosserieteilen. Diese Grundierungen können gegebenenfalls mit weiteren Lackschichten versehen werden.

### Beispiel 1

### (Herstellung von organischen Wismutsalzen):

Deionisiertes Wasser und Säure werden vorgelegt und auf 70°C erwärmt. Unter Rühren wird handelsübliches Wismutoxid (Bi₂O₃) portionsweise zugegeben. Nach weiteren 6 Stunden Rühren bei 70°C wird der Ansatz auf ca. 20°C gekühlt und 12 Stunden ohne Rühren belassen. Schließlich wird der Niederschlag abfiltriert, mit wenig Wasser und Ethanol gewaschen und bei einer Temperatur von 40 - 60°C getrocknet.

Folgende Salze werden unter Verwendung der angegebenen Mengenanteile hergestellt:

| | |
|---|---|
| Wismutlactat | 466 Teile (1 Mol) Wismutoxid + 901 Teile (7 Mol) Milchsäure 70 % in Wasser |
| | |
| Wismutdimethylolpropionat | 466 Teile (1 Mol) Wismutoxid + 938 Teile (7 Mol) Dimethylolpropionsäure + 2154 Teile Wasser |

### Beispiel 2

### (Herstellung einer wismuthaltigen KTL-Dispersion)

a) 570 g eines Epoxidharzes auf Basis von Bisphenol A (Epoxidäquivalent 190) und 317 g Methoxypropanol werden auf 60°C erwärmt, innerhalb von 2 Stunden mit einer Mischung aus 116 g Ethylhexylamin und 163 g eines polymeren Amins (siehe unten) versetzt und bis zu einem MEQ-Wert von 2,06 reagiert. Anschließend werden 1330 g einer 75 %igen Lösung eines Bisphenol A-Epoxidharzes (Epoxidäquivalent 475) in Methoxypropanol zugegeben. In der Folge wird bei 60°C innerhalb einer Stunde eine Lösung von 189 g Diethanolamin in 176 g Methoxypropanol zugegeben und die Reaktion bis zu einem MEQ-Wert von 1,57 geführt. Nach weiterer Zugabe einer Lösung von 78 g Diethylaminopropylamin in 54 g Methoxypropanol innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARTNER-HOLD; 6 g Harz + 4 g Methoxypropanol) von I - J wird mit Methoxypropanol auf einen Feststoffgehalt von 65 Gew.-% verdünnt. Das Produkt hat eine Aminzahl von 117 mg KOH/g und eine Hydroxylzahl von 323 mg KOH/g, jeweils auf den Feststoff bezogen.
   Das polymere Amin wird durch Umsetzung von 1 Mol Diethylentriamin mit 3,1 Mol 2-Ethylhexylglycidylether und 0,5 Mol eines Bisphenol A-Epoxidharzes (Epoxidäquivalent 190) in 80 %iger Methoxypropanol-Lösung hergestellt. Das Produkt weist eine Viskosität (DIN 53 211/ 20°C; 100 g Harz + 30 g Methoxypropanol von 60 bis 80 Sekunden auf.
b) 134 g Trimethylolpropan werden mit 160 g Malonsäurediethylester versetzt und bis zum Destillationsbeginn (ca. 140 - 150°C) erhitzt. Bei steigender Temperatur (bis 180°C) werden 46 g Ethanol abdestilliert. Nach beendeter Reaktion wird mit 128 g Diethylenglykoldimethylether verdünnt und auf 60°C gekühlt. Anschließend werden 264 g eines Reaktionsproduktes aus 1 Mol Toluylendiisocyanat und 1 Mol Ethylenglykolmonoethylether innerhalb von 4 Stunden zugegeben und bei 60°C auf einen NCO-Gehalt unter 0,02 Milliäquivalent pro g Probe reagiert.
   Das erhaltene Produkt hat einen Festtoffgehalt von 80 ± 2 Gew.-% (30 Minuten, 120°C), eine Viskosität nach GARDNER - HOLD (10 g Produkt + 2 g Diethylenglykoldimethylether) von K und einen Brechungsindex n 20/d von 1,4960.
c) Die unter a) und b) erhaltenen Produkte werden im Verhältnis 70 : 30 (bezogen auf Feststoffgehalt) gemischt. Anschließend wird Milchsäure zugegeben, wobei deren zur Erreichung einwandfreier Wasserlöslichkeit erforderliche Menge in Vorversuchen ermittelt wurde. Es wird auf 70°C erhitzt und innerhalb von zwei Stunden Wismutdimethylolpropionat unter Rühren portionsweise in einer solchen Menge zugegeben, daß 1,5 Gew.-% Wismut, bezogen auf Feststoffgehalt, im Ansatz vorhanden sind. Anschließend wird noch 6 Stunden bei 60 - 70°C gerührt und zuletzt mit Methoxypropanol auf einen Feststoffgehalt von 65 Gew.-% verdünnt.
   Nach dem Abkühlen wird durch Zugabe von deionisiertem Wasser in eine wäßrige Dispersion mit einem Festkörper von 40 Gew.-% überführt.

### Beispiel 3

### (Herstellung einer KTL-Dispersion)

a) 832 Teile des Monocarbonats eines Epoxidharzes auf der Basis von Bisphenol A (Handelsprodukt Epicote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht bis eine Epoxidzahl von 0 erreiche wird. Zu diesem Produkt (Festkörper 70 %, 2 Äquivalente Carbonat) werden bei 40 bis 80°C in Gegenwart von 0,3 % Zn-Acetylacetonat als Katalysator 307 Teile eines Umsetzungsproduktes aus 174 Teilen Toluylendiisocyanat (2 Äquivalente NCO) mit 137 Teilen 2-Ethylhexanal unter Zugabe von 0,3 % Benzyltrimethylammoniumhydroxid (Triton B) mit einem NCO-Gehalt von ca. 12,8 % gegeben. Es wird bis zu einem NCO-Wert von ca. 0 umgesetzt und dann mit Diglykoldimethylether auf ca. 70 % Festkörper eingestellt.
b) Zu 1759 Teilen eines Biscarbonats eines Epoxidharzes auf der Basis von Bisphenol A (Handelsprodukt Epicote 1001 ^{(R)}) werden bei 60 bis 80°C 618 Teile eines Umsetzungsproduktes aus 348 Teilen Tolylendiisocyanat (80 % 2,4-Isomeres; 20 % 2,6-Isomeres) mit 274 Teilen 2-Ethylhexanol unter Zugabe von 0,3 % Benzyltrimethylammoniumhydroxid als Katalysator mit einem Rest-NCO-Gehalt von 12,8 % langsam zugegeben unter Katalyse von 0,3 % eines nicht-ionischen Emulgators (Triton B^{(R)}). Die Reaktion wird bis zu einem NCO-Wert von ca. 0 fortgesetzt. Das Produkt hat einen Feststoffgehalt von 70 %. Zu 860 Teilen Bishexamethylentriamin in 2315 Teilen Methoxypropanol gelöst werden bei einer Temperatur von 20 bis 40°C 622 Teile des Umsetzungsproduktes aus 137 Teilen 2-Ethylhexanol mit 174 Teilen Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert.
c) Es wird mit 30 mmol Ameisensäure/100 g Harz neutralisiert. Anschließend wird durch Zugabe von deionisiertem Wasser in eine wäßrige Dispersion mit einem Festkörper von 40 Gew.-% überführt.

### Herstellung von Pigmentpasten

### Beispiel 4

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 374 Teile deionisiertes Wasser gegeben.

Dazu werden 17,2 Teile Dibutylzinnoxid, 12,3 Teile Ruß und 215,9 Teile Kaolin gegeben. Mit deionisiertem Wasser wird auf einen Festkörper von 45 Gew.-% eingestellt und auf einer Perlmühle vermahlen. Es entsteht eine stabile Pigmentpaste.

### Beispiel 5

Beispiel 4 wird wiederholt mit dem Unterschied, daß anstelle der dortigen Pigmentmischung 228,1 Teile Ruß und 17,2 Teile Dibutylzinnoxid verwendet werden.

### Beispiel 6

Beispiel 4 wird wiederholt mit dem Unterschied, daß anstelle der dortigen Pigmentmischung 228,1 Teile Austin Black 325 und 17,2 Teile Dibutylzinnoxid verwendet werden.

### Beispiel 7

Beispiel 4 wird wiederholt mit dem Unterschied, daß anstelle der dortigen Pigmentmischung 245,3 Teile Ruß verwendet werden.

### Beispiel 8

Beispiel 4 wird wiederholt mit dem Unterschied, daß anstelle der dortigen Pigmentmischung 245,3 Teile Austin Black verwendet werden.

### Beispiel 9

Beispiel 4 wird wiederholt mit dem Unterschied, daß anstelle der dortigen Pigmentmischung 233,1 Teile Kaolin und 12,3 Teile Ruß verwendet werden.

### Beispiel 10 - 15 (Herstellung von KTL-Bädern und -Beschichtungen)

Zu 2250 Teilen KTL-Dispersion werden 3083 Teile deionisiertes Wasser gegeben. Unter gutem Rühren werden 667 Teile Pigmentpaste zugesetzt. Es entstehen KTL-Bäder mit einem Festkörper von 20 Gew.-%. Aus diesen werden übliche phosphatierte Karosseriestahlbleche in 20 µm Trockenschichtdicke kathodisch abgeschieden und eingebrannt. Nachfolgende Tabelle stellt die Zusammensetzung der KT-Lacke und die erhaltenen Prüfergebnisse zusammen.

| **Lack** | **Dispersion** | **Paste** | **Einbrenntemperatur** ^{**1)**} | **Filmwiderstand** ^{**2)**} | **Ergiebigkeit** ^{**3)**} | **Korrosionslinie** ^{**4)**} |
|---|---|---|---|---|---|---|
| 10 (Vgl.) | 2 | 7 | 160 | 5.10³ | 40,3 | 15 |
| 11 (Erf.) | 2 | 8 | 160 | >10¹⁰ | 41,7 | 20 |
| 122 (Vgl.) | 2 | 9 | 160 | >10¹⁰ | 38,5 | 18 |
| 13 (Vgl.) | 3 | 4 | 170 | >10¹⁰ | 38,5 | 17,5 |
| 14 (Vgl.) | 3 | 5 | 170 | 1,5·10⁴ | 40,7 | 14 |
| 15 (Erf.) | 3 | 6 | 170 | >10 ¹⁰ | 41,7 | 20,5 |

| | | | | | | |
|---|---|---|---|---|---|---|
| ¹⁾ Einbrennbedingung: 30 min. Objekttemperatur, Angaben in °C | | | | | | |
| ²⁾ nach DIN 53 482 mit Meßspannung 100 V, Angaben in Ohm | | | | | | |
| ³⁾ Angaben in m² beschichtbarer Fläche/1000 g Lackfestkörper bei einer Schichtdicke von 20 µm | | | | | | |
| ⁴⁾ Ermittlung der Korrosionslinie nach VDA-Richtlinie 621 - 180. Der angegebene Wert gibt die rostfreie Strecke in cm an. Der Korrosionstest wurde als Salzsprühtest von 240 Stunden Dauer nach DIN 53 167 durchgeführt. | | | | | | |

Die unter Verwendung der Lacke 10 und 14 beschichteten Substrate wiesen rauhe, strukturierte Oberflächen auf. Die Badstabilität und die Karrosionsschutzwirkung der Lacke 10 und 14 war unzureichend.

## Patentansprüche

1. Wäßriger kathodisch abscheidbarer Tauchlack, enthaltend ein oder mehrere übliche, selbst- oder fremdvernetzende, kationische Gruppen enthaltende Bindemittel, sowie gegebenenfalls einen oder mehrere Vernetzer, Pigmente, Füllstoffe und/oder lackübliche Additive dadurch gekennzeichnet, daß er 5 bis 40 Gew.-%, bezogen auf den Feststoffgehalt, Kohle- und/oder von Ruß und Graphit unterschiedliche Kohlenstoffteilchen mit einer mittleren Teilchengröße von 300 bis 10000 nm und einem spezifischen Gewicht von unter 1,7 g/cm³ enthält.

2. Wäßriger kathodisch abscheidbarer Tauchlack nach Anspruch 1, dadurch gekennzeichnet, daß er ein Gewichtsverhältnis von Pigment, Füllstoff und Kohle- bzw. Kohlenstoffteilchen zu Bindemittel- und gegebenenfalls vorhandenem Vernetzer-Festkörper von 0,05 : 1 bis 0,8 : 1 aufweist.

3. Wäßriger kathodisch abscheidbarer Tauchlack nach Anspruch 1 oder 2, dadurch gekennzeichnet, daß er außer den Kohle- und Kohlenstoffteilchen keine weiteren Pigmente und Füllstoffe enthält.

4. Wäßriger kathodisch abscheidbarer Tauchlack nach einem der Ansprüche 1 bis 3, dadurch gekennzeichnet, daß er als Kohlenstoffteilchen solche aus durch Hitzeeinwirkung aus biologischem Material gebildetem Kohlenstoff enthält.

5. Wäßriger kathodisch abscheidbarer Tauchlack nach Anspruch 4, dadurch gekennzeichnet, daß er Holzkohle-, Tierkohle- und/oder Aktivkohleteilchen enthält.

6. Wäßriger kathodisch abscheidbarer Tauchlack nach einem der Ansprüche 1 bis 3, dadurch gekennzeichnet, daß er als Kohleteilchen Steinkohleteilchen enthält.

7. Wäßriger kathodisch abscheidbarer Tauchlack nach einem der vorhergehenden Ansprüche, dadurch gekennzeichnet, daß er als Bindemittel ein basisches Harz mit primären, sekundären und/oder tertiären Aminogruppen, entsprechend einer Aminzahl von 20 bis 250 mg KOH/g, die teilweise oder vollständig neutralisiert sind, und mit einem Gewichtsmittel der Molmasse (Mn) von 300 bis 10000 enthält.

8. Wäßriger kathodisch abscheidbarer Tauchlack nach einem der vorhergehenden Ansprüche, dadurch gekennzeichnet, daß er 0,1 bis 5 Gew.-% einer oder mehrerer Wismutverbindungen in Form von Wismutaten, organischen Wismutkomplexen und/oder Wismutsalzen organischer Carbonsäuren enthält, berechnet als Wismut und bezogen auf den Bindemittelfestkörpergehalt.

9. Verfahren zur kataphoretischen Beschichtung von Substraten mit elektrisch leitender Oberfläche, dadurch gekennzeichnet, daß man einen wäßrigen Tauchlack gemäß einem der Ansprüche 1 bis 8 verwendet.

10. Substrate mit elektrisch isolierenden Überzügen, beschichtet nach dem Verfahren nach Anspruch 9.

11. Verwendung der wäßrigen Tauchlacke nach einem der Ansprüche 1 bis 8 zur Herstellung elektrisch isolierender Überzüge durch elektrophoretische Beschichtung.

12. Verwendung von Kohleteilchen und/oder von Ruß und Graphit unterschiedlichen Kohlenstoffteilchen mit einer mittleren Teilchengröße von 300 bis 10000 nm und einem spezifischen Gewicht von unter 1,7 g/cm³ zur Verbesserung des Umgriffs wäßriger kataphoretisch abscheidbarer Tauchlacke und zur Erhöhung der Korrosionslinie aufgrund des besseren Umgriffs.

## Claims

1. An aqueous, cathodically depositable dipping lacquer, containing one or more customary, self- or externally crosslinking binder vehicles which contain cationic groups, and optionally containing one or more crosslinking agents, pigments, extenders and/or customary lacquer additives, characterised in that it contains 5 to 40 % by weight, with respect to the solids content, of coal particles and/or of particles of carbon other than carbon black and graphite, which particles have an average particle size of 300 to 10,000 nm and a specific gravity less than 1.7 g/cm³.

2. An aqueous, cathodically depositable dipping lacquer according to claim 1, characterised in that it has a ratio by weight of 0.05 : 1 to 0.8 : 1 of pigment, extender and coal or carbon particles to binder vehicle solids and crosslinking agent solids which are optionally present.

3. An aqueous, cathodically depositable dipping lacquer according to claim 1 or 2, characterised in that it contains no further pigments and extenders in addition to the coal and carbon particles.

4. An aqueous, cathodically depositable dipping lacquer according to any one of claims 1 to 3, characterised in that it contains, as carbon particles, particles comprising carbon formed by the effect of heat on biological material.

5. An aqueous, cathodically depositable dipping lacquer according to claim 4, characterised in that it contains particles of vegetable charcoal, animal charcoal and/or activated charcoal.

6. An aqueous, cathodically depositable dipping lacquer according to any one of claims 1 to 3, characterised in that it contains hard coal particles as coal particles.

7. An aqueous, cathodically depositable dipping lacquer according to any one of the preceding claims, characterised in that it contains, as a binder vehicle, a basic resin which comprises primary, secondary and/or tertiary amino groups corresponding to an amine number of 20 to 250 mg KOH/g which are partially or completely neutralised, and which has a weight average molecular weight (Mn) of 300 to 10,000.

8. An aqueous, cathodically depositable dipping lacquer according to any one of the preceding claims, characterised in that it contains 0.1 to 5 % by weight, calculated as bismuth and with respect to the binder vehicle solids content, of one or more bismuth compounds in the form of bismuthates, organic bismuth complexes and/or bismuth salts of organic carboxylic acids.

9. A process for the cataphoretic coating of substrates having an electrically conducting surface, characterised in that an aqueous dipping lacquer according to any one of claims 1 to 8 is used.

10. Substrates comprising electrically insulating coatings, coated by the process according to claim 9.

11. The use of the aqueous dipping lacquers according to any one of claims 1 to 8 for the production of electrically insulating coatings by electrophoretic coating.

12. The use of coal particles and/or of particles of carbon other than carbon black and graphite, which particles have an average particle size of 300 to 10,000 nm and a specific gravity less than 1.7 g/cm³, for improving the wrap-around of aqueous, cataphoretically depositable dipping lacquers and for increasing the corrosion protection due to the better wrap-around.

## Revendications

1. Peinture aqueuse apte à l'électrodéposition cathodique en immersion, contenant un ou plusieurs liants usuels portant des groupes cationiques et autoréticulants ou réticulants sous l'action d'un agent étranger, et le cas échéant un ou plusieurs agents réticulants, pigments, matières de charge et/ou additifs usuels pour peintures et vernis, caractérisée en ce qu'elle contient de 5 à 40 % en poids, sur les matières solides, de particules de charbon et/ou de carbone autre que le noir de carbone et le graphite, à une dimension de particule moyenne de 300 à 10 000 nm et un poids spécifique inférieur à 1,7 g/cm³.

2. Peinture aqueuse apte à l'électrodéposition cathodique en immersion selon revendication 1, caractérisée en ce que le rapport en poids entre le pigment, la matière de charge et les particules de charbon ou de carbone, d'une part, les matières solides du liant et le cas échéant du réticulant d'autre part, va de 0,05:1 à 0,8:1.

3. Peinture aqueuse apte à l'électrodéposition cathodique selon revendication 1 ou 2, caractérisée en ce que, en dehors des particules de charbon et de carbone, elle ne contient aucun autre pigment ou matière de charge.

4. Peinture aqueuse apte à l'électrodéposition cathodique selon l'une des revendications 1 à 3, caractérisée en ce qu'elle contient en tant que particules de carbone des particules d'un carbone formé par action de la chaleur sur une matière biologique.

5. Peinture aqueuse apte à l'électrodéposition cathodique selon revendication 4, caractérisée en ce qu'elle contient des particules de charbon de bois, de charbon animal et/ou de charbon actif.

6. Peinture aqueuse apte à l'électrodéposition cathodique selon une des revendications 1 à 3, caractérisée en ce qu'elle contient en tant que particules de charbon des particules de houille.

7. Peinture aqueuse apte à l'électrodéposition cathodique selon une des revendications qui précèdent, caractérisée en ce qu'elle contient en tant que liant une résine basique portant des groupes amino primaires, secondaires et/ou tertiaires, en quantité correspondant à un indice d'amine de 20 à 250 mg de KOH/g, et neutralisés en totalité ou en partie, avec une masse moléculaire moyenne, moyenne en poids, Mn, de 300 à 10 000.

8. Peinture aqueuse apte à l'électrodéposition cathodique selon une des revendications qui précédent, caractérisée en ce qu'elle contient de 0,1 à 5 % en poids d'un ou plusieurs dérivés du bismuth à l'état de bismuthates, de complexes organiques du bismuth et/ou de sels de bismuth d'acides organiques carboxyliques, exprimé en bismuth et par rapport aux matières solides du liant.

9. Procédé pour le revêtement par cataphorèse de supports à surface conductrice de l'électricité, caractérisé en ce que l'on utilise une peinture aqueuse selon l'une des revendications 1 à 8.

10. Supports portant des revêtements isolant de l'électricité appliqués par le procédé selon revendication 9.

11. Utilisation d'une peinture aqueuse selon l'une des revendications 1 à 8 pour l'application de revêtements isolant de l'électricité par électrophorèse.

12. Utilisation de particules de charbon et/ou de particules d'un carbone autre que le noir de carbone et le graphite, à une dimension de particule moyenne de 300 à 10 000 nm et à un poids spécifique inférieur à 1,7 g/cm³, en vue d'améliorer l'aptitude des peintures aqueuses applicables par cataphorèse à atteindre les endroits difficilement accessibles et d'accroître la ligne de corrosion en raison de cette meilleure aptitude.
